(19) Europäisches Patentamt
European Patent Office
Office européen des brevets

(11) **EP 2 570 317 A1**

(12) **EUROPEAN PATENT APPLICATION**

(43) Date of publication:
20.03.2013 Bulletin 2013/12

(51) Int Cl.:
*B60T 13/66* (2006.01)     *B60T 17/18* (2006.01)
*B60T 7/04* (2006.01)

(21) Application number: 11181699.7

(22) Date of filing: 16.09.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Haldex Brake Products Aktiebolag**
**261 24 Landskrona (SE)**

(72) Inventors:
• **Nilsson, Anders**
**SE-261 45 Landskrona (SE)**

• **Svendenius, Jacob**
**SE-226 48 Lund (SE)**
• **Nockhammar, Ola**
**SE-237 35 Bjärred (SE)**
• **Seglö, Fredrik**
**SE-260 40 Viken (SE)**

(74) Representative: **Rehberg Hüppe + Partner**
**Patentanwälte**
**Nikolausberger Weg 62**
**37073 Göttingen (DE)**

(54) **Method for operating an electro-mechanical brake system**

(57)     The present invention relates to an electro-mechanical brake system comprising at least two electrical energy sources for redundantly supplying energy. According to the inventive method, the energy status (187, 188) of at least one of the electrical energy sources (32, 33) is permanently or intermittently monitored. In case of detecting a low energy status (187, 188), suitable measures are taken for providing a decreased energy consumption, a recharging process for the energy sources (32, 33) and/or for operating the vehicle in an emergency mode.

Fig. 15

**Description**

The present invention relates to a method for operating an electro-mechanical brake system of a utility vehicle wherein the utility vehicle might be equipped solely with electro-mechanical brakes or with electro-mechanical brakes at single or all axles with additional pneumatical brakes and/or hydraulic brakes that might be designated for providing service brake forces and/or parking brake forces.

## BACKGROUND ART

German Patent No. DE 197 55 050 C2 discloses an electro-mechanical brake system with two circuits. The two circuits are supplied with electrical energy by two separate, electrically decoupled accumulators. The two circuits work with different voltages supplied by the accumulators, e.g. 12 V or 14 V and 36 V or 42 V. The circuit with the higher voltage might be related to a brake circuit of brakes at the front axle, whereas the circuit with the lower voltage supplies electrical energy to brakes of a rear axle. The circuits supplied with the higher voltage provide a higher brake force reserve. The two accumulators are reloaded with electrical energy by means of a starter-generator working at the higher output voltage. For reloading the accumulator having the lower voltage the electrical output of the starter-generator is converted by a DC voltage converter. The loading state of the two accumulators is monitored by two separate accumulator status sensors each related to one accumulator. In case of the accumulator status sensors signalizing an accumulator status which is not sufficient for actuating the related brake circuit, a warning signal is generated. In case of the energy status getting smaller than a required energy status, nevertheless the other brake circuit is still ready for use due to the fact that the other brake circuit is supplied with electrical energy from the other accumulator which is decoupled from the first one. The patent also suggests using a control device for the electrical power supply comprising a CPU which is responsible for controlling the generator. Via a signalling device it is possible to early signalize to the driver that the energy resource in one energy supply circuit drops below a threshold value which is required for a safe use of the vehicle.

German Patent No. DE195 48 560C5discloses a safety mechanism, wherein upon start-up of the vehicle a test procedure is started for checking the function of the electro-mechanical brake device. During the test procedure at least one brake actuator is activated for causing a minimum brake force. In case of detecting that the minimum brake force is not caused by the brake actuator during the test procedure, a parking brake remains locked so that it is impossible to move the vehicle. For increasing the safety of the brake system the electronic circuits are redundant and supplied by electrical energy from two separate accumulators. An approximation of a clamping force of brake pads at an associated wheel disc is determined from the current of an electrical motor being used for moving and pressing the brake pad against the wheel disc. The accumulators are reloaded by the main electric generator of the vehicle. The test procedure is started when the number of revolutions of the combustion engine per minute has reached a defined stable idling speed. The motors of the brake actuators of all wheels are at the same time energized wherein the current at the brake actuators is controlled for causing a predetermined minimum brake force. In case of the test procedure leading to the result that the energy status of the accumulators is not sufficient, the test is repeated after a predetermined time interval for providing the option that the accumulators are reloaded by the running combustion engine to a sufficient energy status. It is also possible that the brake actuators are not actuated at the same time but separately from each other with a predetermined time shift. In the test procedure for detecting an insufficient energy level it is possible that the produced current for actuating the electrical motor of a brake actuator is compared to a predetermined threshold. Besides the comparison of the absolute values of the current with the threshold it is also possible to monitor the time that is needed for reaching a predetermined threshold current value. An indicator for an insufficient energy status might be that the time needed for reaching the predetermined current value at the brake actuator exceeds a threshold time interval.

German Patent Application No. DE 103 16 090 A1 discloses a method for monitoring the energy status of one single accumulator. For reloading the accumulator the brake force distribution to the axles of the vehicle is changed with increased brake forces at the driven axle. In the hybrid drive train or a drive train with a generator the brake energy at the driven axle is recuperated for reloading the accumulator. In case of the accumulator being loaded to its maximum, additional consumers as a heating or lightening system might be activated. The document also suggests using a drive train with a starter-generator. Recuperated electrical energy might also be used for feeding the vehicle power supply. The automatic change of the brake force distribution might be dependent on the vehicle moving along a straight road or through a curve with a cooperation with an electronic stability programme.

According to German Patent Application No. DE 10 2007 036 665 A1 mechanical actuators for an electro-mechanical steering system or an electro-mechanical brake system are supplied with electrical energy from a vehicle power supply at a level correlating with a "worst case" activation of the actuator, in particular a heavy brake demand for a large coefficient of friction and loaded vehicle. However, during normal drive situations the supply of electrical energy at a lower level would be sufficient. For guaranteeing safe operation of the vehicle, normally the vehicle power supply is configured and controlled according to the "worst case" scenario leading to an over-dimensioning of the vehicle power supply. The patent application suggests powering the actuator with a small power supply voltage for normal brake situations whereas for "worst case" brake situations the power supply voltage is increased. It is possible to adapt the lower power supply voltage during a number of actuations of the brake actuator during normal drive situations.

German Patent Application No. DE 102 16 184 A1 suggests applying a test signal to an accumulator for checking the energy status of the accumulator. Such test signal might be caused by activating an electro-mechanical brake, in particular with the maximum of the intensity of the brake application. In case of detecting a decreased availability or energy level of the accumulator, it is suggested to deactivate consumers responsible for the comfort of the driver in a predetermined order. For an alternative or cumulative embodiment it is suggested to decrease the electrical power supplied for consumers related with the drive security in case of detecting a decreased energy status of the accumulator. In case of all these measures not being sufficient, the system might be switched to an alternative system or the driver is forced to stop the vehicle. Furthermore, the document discloses to signalize the energy status of the accumulator to the driver by means of an acoustical or optical signal.

German Patent Application No. DE 101 59 080 A1 discloses the control of a drive train of a vehicle comprising a starter-generator. In case of detecting a low energy status of an accumulator of the vehicle, a gear box of the drive train is automatically shifted to a gear guaranteeing an optimal production of electrical energy with the starter-generator.

German Patent Application No. DE 10 2007 057 605 A1 relates to the automatic change of a brake force distribution between the different axles in dependence on the energy status of an accumulator and the need for a recuperation of energy by a generator.

German Patent Application No. DE 10 2010 002 799 A1 describes prior art for power supply management systems including monitoring algorithms for the accumulator status and accumulator energy levels basing on a sensor integrated into the accumulator for sensing the current, voltage and temperature of the accumulator. The management systems base on a dynamical accumulator model used for simulating the accumulator status and the accumulator energy level during operation of the vehicle. The accumulator model is built with between 20 and 30 auxiliary resistances and capacities. The characteristic parameters of the model are measured and adapted on the basis of measured signals as currents, voltages and temperature. Here, a plurality of test signals in the form of peak-like or impulse-like current signals are used for identifying the characteristic parameters of the accumulator model. Such test signals should have a large amplitude and a large slope for causing a reaction of the accumulator in a broad frequency range. The patent application states that the activation of typical consumers as the rear window heating or the seat heating does not cause test signals having a sufficient amplitude or slope. Instead, generally a test signal derived from the activation of a starter of the combustion engine comprises a sufficient amplitude and slope. However, such test signal basing on the engine starting procedure is only available when starting the vehicle but not during continued drive situations. The document suggests using the activation of an electro-mechanical brake actuator for causing the test signal. The actuation of the brake actuator might be caused by the management system via a separate brake control device. For the identification of the characteristic parameters of the accumulator model it is possible that the electro-mechanical brake actuator is actuated with current pulses having different amplitudes. Furthermore, the document suggests actuating a plurality of different electro-mechanical brake actuators in a sequence one after another. Having identified the accumulator model by means of an algorithm the accumulator status and the energy level might be approximated by simulation during the operation of the vehicle. For the test signal applied to the electro-mechanical brake actuator the amplitude of the current might range between 50 A and 100 A building up within 5 ms to 10 ms. The document also discloses that on the basis of the simulated accumulator status or accumulator energy level specific classes of electrical consumers might be deactivated for easing a regeneration of the accumulator.

German Patent Application No. DE 197 32 229 A1 relates to a vehicle with an electro-mechanical brake system which is supplied with electrical energy from the vehicle power supply. The document suggests using diagnosis means for determining the potential of at least one electrical energy source. In case of detecting a low energy level or potential, the operation of the drive train and/or the vehicle brakes is automatically modified. For one embodiment for low energy levels correlating with insufficient brake forces at the brake actuators the combustion engine is automatically controlled for producing a brake torque. Furthermore, the document suggests deactivating the option to start the vehicle in case of detecting a low energy level. It is also possible to reduce the admissible driving velocity of the vehicle in steps in dependence on the detected energy level. For another embodiment, the brake accelerations caused by the brake actuators are in steps reduced in dependence on the determined energy level. As a last measure for low energy levels for zero drive velocity the parking brake is automatically activated.

## OBJECT OF THE INVENTION

It is the object of the present invention to provide a method for operating an electro-mechanical brake system with additional options

- for guaranteeing the safety of the energy supply of the electro-mechanical brake system by the related electrical energy sources and/or

- for providing measures for treating a decreasing or insufficient energy level of the energy sources related with the electro-mechanical brake system.

**SOLUTION**

The object of the invention is solved by the features of independent claim 1. Further embodiments of the invention are specified in dependent claims 2 to 21.

**DESCRIPTION OF THE INVENTION**

According to the invention, at least two electrical energy sources are provided for supplying the electrical energy for the actuation of the electro-mechanical brake system. Accordingly, a redundant energy supply is provided. Here, the electrical energy sources are in particular each built by an accumulator. The accumulators might have the same or different capacities and/or voltage levels. In particular, the accumulators responsible for the electro-mechanical brake system are independent from the main power supply of the utility vehicle. In case that the accumulators responsible for the electro-mechanical brake system are additional to another accumulator building the main power supply of the utility vehicle it might also be possible that in exceptional operating states an energy flow between the accumulator for the main power supply and the accumulators related with the electro-mechanical brake systems is controlled.

The at least two electrical energy sources according to the invention are used for supplying energy to the electro-mechanical brake system. Here, the invention covers both embodiments where the at least two electrical energy sources are (at least at some operational states of the utility vehicle) at the same times or intermittently used for supplying energy to all of the electro-mechanical brakes or specific electro-mechanical brakes associated with different sides, circuits or axles of the vehicle.

According to the inventive method, the energy status of at least one of the electrical energy sources is monitored. This monitoring in particular done for detecting

- an energy decrease or drop,
- an energy status below a threshold value,
- a low energy status or a change of an energy status

with the aim to avoid an insufficient energy supply to the electro-mechanical brake system and/or for triggering measures for increasing the energy status or for avoiding an undue decrease of the energy status. The inventive monitoring might be done for one single electrical energy source or for some or all of the electrical energy sources. The monitoring might be done continuously, at distinct operating conditions (start of the vehicle, brake actions, ...) or might be done intermittently, i.e. at predetermined time intervals, at time intervals depending on the former determined energy status and the like.

The inventive monitoring of the energy status of at least one of the electrical energy sources might in particular lead to

- an increase of the possible operating time of the electro-mechanical brake systems without an electrical failure,
- and/or an increase of the safety of the operation of the utility vehicle and/or
- a decreased consumption of electrical energy.

For one embodiment of the inventive method a test signal is automatically generated. The energy status is then determined from the response of at least one electrical energy source to the test signal. Here, any test signal might be used. To name only some examples, the test signal might be an activation of the brake which might be done during start-up of the utility vehicle, when parking or during drive. The response of the electrical energy source upon the test signal might be directly measured at the electrical energy source, e.g. by measuring the output voltage or current of the energy source. However, it is also possible to indirectly measure the response of at least one electrical energy source which might be done by measuring an electrical signal at the electro-mechanical brake system, e.g. by measuring a current of the coil of an electrical actuator. However, it is also possible to indirectly determine the response on the basis of a measured brake force which is dependent both on the test signal and the energy status.

Another example for a test signal might be an activation or a deactivation of a generator of the utility vehicle responsible for recharging at least one electrical energy source. Here, the energy supplied by the generator might be given by a measurement or by a predetermined characteristic or functionality, e.g. depending on the drive velocity when activating the generator. In dependence on the energy level of the accumulator, the energy supplied by the generator leads to different responses of the accumulator, i.e. changes of the energy status.

In case of using the activation of an electro-mechanical brake as the test signal it is also possible that the test signal itself depends on the energy status of the energy source, e.g. the activating current in the actuator of the electro-mechanical brake. Then the response of the electrical energy source might be determined on the basis of the resulting actuation of the actuator or the resulting brake force - to explain this in simple words, for a large energy status of the energy source the application leads to a larger measured brake force than for the actuation with a lower energy status.

The determined energy status might be used for any purpose. For one embodiment of the invention the determined energy status is brought to the attention of the driver which might be done at one or a plurality of places at the utility vehicle, in particular in the driver's cabin. To mention only some examples, the determined energy status might be signalised to the driver by a sound or by a display. The energy status might be displayed in binary form ("status sufficient"/"status insufficient" or with a number of energy status ranges) or with an analogue display. The signal to the driver might also be an indication that it is required that the utility vehicle has to be driven to the workshop for an external loading of the electrical energy sources or for a replacement of the electrical energy sources.

In one particular embodiment a warning signal is produced in case that the determined energy status becomes smaller than a threshold value. It is also possible that the warning signal is created not (only) on the basis of the absolute value of the energy status but (also) on the basis of the change of the energy status (in case of a fast decrease of the monitored energy status in time this might be taken as an indicator for an insufficient energy status of the energy source).

When creating a warning signal in case of the determined status being or getting smaller than a threshold value, this threshold value might be a fixed threshold value. However, for another embodiment of the invention the threshold value might be dependent on at least one parameter which might be a temperature of the environment or of the electrical energy source itself or at least one operating parameter of the utility vehicle. To mention only one possible example, the threshold value might differ in dependence on the energy status being determined immediately after a brake actuation or after a longer time interval without any brake actuation or in dependence on a former brake actuation being a light or a heavy brake actuation.

The invention also covers embodiments wherein the energy status is evaluated separately for each electrical energy sources. However, the invention also suggests that firstly the energy status for each electrical energy source is monitored and determined. In case that the energy status of one electrical energy source is poor but the determined energy status of an other electrical energy source is high, there might be no indication for additional measures to be taken or for an unsecure drive situation. Instead, in case of two electrical energy sources being close to a threshold lower value of the energy status per se being sufficient for running the utility vehicle in a safe mode, this cumulative low energy status might be an indicator that additional measures should be taken or the drive situation is unsafe. On the basis of this observation the invention also suggests that the energy status of the electrical energy sources are at first separately determined and then correlated with each other. It is also possible that from the two single energy status an overall energy status is determined wherein the overall energy status is dependent on the two single energy status of the two energy sources by a given dependency or function. To name only one very simple example, the two single energy status might be summed up and then compared to a threshold value. In practice, in most cases a more complex correlation or combination of the two energy status will be required.

According to another embodiment, it is not only the energy status of at least one of the electrical energy sources that is monitored. Instead, also other parameters influencing the energy status of the energy sources are monitored. Here, the invention also suggests monitoring an output of a generator supplying at least one of the electrical energy source. In case of detecting a low energy status of an electrical energy source but at the same time detecting that a large energy level is supplied by the generator, this might be taken as an indicator that the situation is not as critical as in cases where both the determined energy status is low and the supplied electrical output of the generator is low. Furthermore, in case of the output of the generator being high but the increase of the energy status of the electrical energy source being comparatively small in reaction to this high output of the generator, this might be seen as an indicator that there is a failure in the electrical energy source itself or in the electrical circuit connected with the electrical energy source.

As mentioned above, the energy status might be determined intermittently after a time interval. This time interval might be fix or dependent on at least one parameter. To name only some examples, this parameter might be the formally determined energy status, an environmental temperature or a temperature of the accumulator, the number of brake actuations within a given time interval and/or the intensity of a brake actuation, the activity of a generator and the like.

For a very simple embodiment the energy status for different electrical energy sources is determined at the same time and/or after the same time intervals. However, the invention also suggests monitoring the energy status for the different electrical energy sources at different time intervals. To name only some examples, it might be possible that an accumulator with a detected lower energy status is monitored with shorter time intervals than another accumulator with a determined higher energy status. It is also possible that an accumulator that permanently or for a specific operating state is used as a "master accumulator" is monitored with shorter time intervals than the other accumulator. Here, the master accumulator is with a high priority used for the supply of electrical energy whereas the other accumulator might only be provided as a fallback energy supply.

Besides or additional to the triggering of the monitoring process of the energy status by time it is additionally or cumulatively possible that the monitoring process is triggered by a specific operating state of the brake system which might be the application of the service brake, the release of a parking brake, a start-up procedure, the opening of the door to the driver's cabin, a sensor detecting that the driver has taken seat, an ignition signal and the like.

The determined energy status of at least one electrical energy source might be used for other purposes additionally to the safety issue.

It is possible that the supply of energy from the generator is controlled on the basis of the monitored energy status. For a first embodiment a control unit automatically directs the supply of energy from the generator to the accumulator comprising the lower energy level. However, in case that the evaluation of the energy status leads to the probability that a low level of the energy status of an accumulator bases upon a failure of this accumulator or an associated electrical circuit, the generator might supply energy to the other accumulator with a larger priority.

The invention also covers embodiments wherein at least one optional consumer receiving electrical energy from one electric energy source is automatically deactivated in case of detecting a low energy status. It is also possible that in these cases at least one function of a plurality of functions of a consumer is deactivated. There are no limitations for the used functions or optional consumers. To name some examples, optional consumers not being designated to the drive safety might be deactivated. It is also possible that a traction control involving a large energy consumption is deactivated. It would also be possible that the electro-mechanical brake system is switched to a low power mode wherein the actuating velocity for the electro-mechanical brake is decreased. It is also possible that a hill-start function controlling the transfer of the brake force to a coupling force of the drive train for avoiding that the vehicle moves down the hill is deactivated. Any other optional consumers or function might also be deactivated.

The invention also suggests controlling the operation of a retarder or another system consuming driving energy in dependence on the determined energy status. In case of detecting a low energy status, the energy management might require a reduction of the brake force for decreasing the energy consumption by the electro-mechanical brakes. This is considered by an increased application of the retarder in brake actuations. The division of the overall brake force to a partial brake force applied by the retarder and the other partial brake force supplied by the electro-mechanical brake system is changed towards a larger partial brake force being supplied by the retarder. Another system consuming driving energy might be the drive train of the vehicle. In case of determining a low electrical energy status, the gearbox might be automatically controlled towards a downshift so that inertial forces of the rotating and accelerating parts of the drive train provide a decreased brake force of the vehicle with a decrease of the electrical load.

The determined energy status might also be used for automatically setting a speed limit of the vehicle. With a decreased energy status the speed limit is decreased. In case of the energy status being smaller than a given threshold, the speed limit might also be limited to zero.

For another embodiment of the invention the activation, the activation frequency, the activation intensity and/or the activation duration of a generator supplying energy to at least one electrical energy source is controlled in dependence on the determined energy status. This embodiment of the invention takes advantage of two cumulative effects:

- In case of increasing the activation of a generator, this leads to an increased supply of energy to the energy source leading to the effect that the energy source is recharged.
- On the other hand, the increased activation of the generator might consume kinetic energy from the vehicle and the drive train leading to a reduction of the demand of electrical energy for actuating the electro-mechanical brake system.

For one inventive method the energy consumption of a part of the electro-mechanical brake system is monitored. In case that an unexpected increased energy consumption of this part is detected, this part of the electro-mechanical brake system is automatically deactivated. By these measures it is possible to avoid unnecessarily high energy consumptions and/or to detect failures in the monitored part of the electro-mechanical brake system.

Another embodiment of the invention is directed to providing a "fallback solution" in case of detecting a low energy status: Here, energy supplied by another electrical energy source is used for supplying the electro-mechanical brake system with electrical energy. This other electrical energy source might be the vehicle accumulator, a vehicle generator and the like.

Furthermore, it is possible that at the start of the vehicle it is prevented that the vehicle is moved in case that a low energy status is detected. This might be done by automatically braking the vehicle, avoiding that a parking brake is released or by interrupting the ignition procedure. It is possible that firstly a warning to the driver is given.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the or all of the features mentioned in the claims.

## BRIEF DESCRIPTION OF THE DRAWINGS

In the following, the invention is further explained and described with respect to preferred exemplary embodiments illustrated in the drawings.

**Fig. 1**    is a schematic view of an operating system of a tractor with a pressurized air system and an electro-mechanical brake system, wherein the inventive method might be used.

**Fig. 2**    schematically shows an alternative embodiment of an operating system with a pressurized air system and an electro-mechanical brake system, wherein the inventive method might be used.

**Fig. 3**    schematically shows a flow chart for a method for determining a trailer force request in an electro-mechanical brake system which might be integrated into the inventive method.

**Fig. 4**    schematically shows a flow chart of signals for controlling a motor of a brake actuator which might be combined with the inventive method.

**Fig. 5**    shows a pedal characteristic used in a step of the flow chart of Fig. 3.

**Fig. 6**    shows characteristics for split friction control also to be used together with the inventive method.

**Fig. 7**    schematically shows one embodiment for an electro-mechanical brake actuator with the related electronic unit to be used with the inventive method.

**Fig. 8**    schematically shows a pneumatic brake circuit (prior art).

**Fig. 9**    schematically shows an electro-mechanical brake circuit with output signals used for determining an estimated brake force usable together with the inventive method.

**Fig. 10**    schematically shows a free body diagram of a tractor and a trailer.

**Fig. 11**    shows a schematic block diagram for a method for determining the trailer force request on the basis of a comparison of a predicted retardation and an actual measured retardation which might be used in combination with the inventive method.

**Fig. 12**    shows a characteristic of the trailer brake request over an auxiliary trailer brake request or a retardation demand to be used in combination with the present invention.

**Fig. 13**    shows a characteristic of a first correction factor in dependence on a trailer brake request to be used in combination with the present invention.

**Fig. 14**    shows a characteristic of a second correction factor in dependence on a trailer brake request to be used together with the inventive measures.

**Fig. 15**    shows a schematic block diagram for one embodiment of the inventive method.

## DESCRIPTION OF THE DRAWINGS

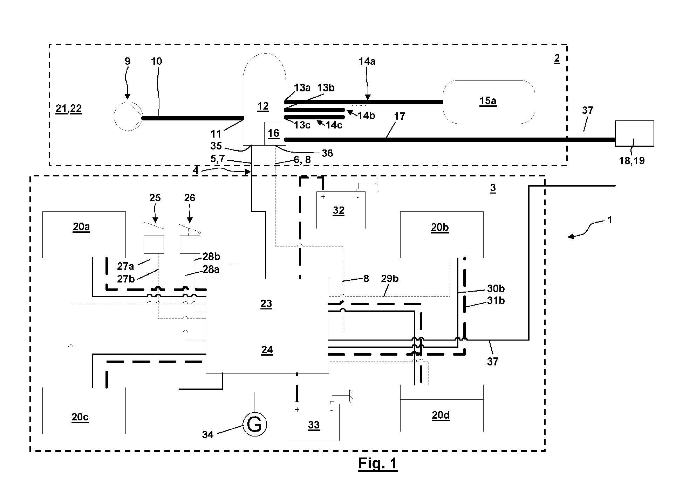

**Fig. 1** illustrates an operating system 1 for a utility vehicle comprising a pressurized air system 2 and an electro-mechanical brake system 3. The pressurized air system 2 and the electro-mechanical brake system 3 are coupled with each other by at least one pneumatical and/or electrical interface 4 and related pneumatic and/or electrical lines, plugs, ports and the like. For the embodiment shown in Fig. 1 the interface 4 is used for transferring electrical brake signals 5, 6 of the tractor from the electro-mechanical brake system 3 to the pressurized air system 2 wherein these signals as well as other signals can be transferred uni-directional or bidirectional. For a preferred embodiment the electrical brake signal 5 of the tractor is transferred by a data bus 7, whereas the electrical brake signal 6 is transferred by an analogue line 8.

In Fig. 1 the pressurized air system 2 is shown in a rough schematic diagram. The person with skill in the art knows the basic way to build pressurized air systems 2 of the present type. The pressurized air system 2 shown in Fig. 1 as an example comprises a compressor 9. Via a supply line 10 the compressor 9 supplies pressurized air to a supply port 11 of an air treatment unit 12. The air treatment unit 12 comprises ports 13a, 13b, 13c connected with consumer circuits 14a, 14b, 14c. At least one consumer circuit 14 comprises a reservoir 15. The air treatment unit 12 supplies pressurized air to the consumer circuits 14. The air treatment unit 12 controls the flow of pressurized air from and to the consumer circuits 14 which might be done by using multiple protection of valves of known types and functions. It is also possible that one reservoir 15a of a specific consumer circuit 14a via the air treatment unit 12 supplies other consumer circuits 14b, 14c which might in particular be the case in specific operating states of the pressurized air system 2 or the related consumer circuits 14. To give only some examples one consumer circuit might be an auxiliary consumer circuit, whereas another consumer circuit might be an air suspension circuit and still another consumer circuit builds a trailer brake circuit.

It might also be possible that the pressurized air system 2 also comprises a tractor brake circuit, e.g. a pneumatic service brake for one single axis, a redundant pneumatic service brake and/or a pneumatic parking brake. However, it is also possible that the pressurized air system 2 does not have any pneumatic service brake circuit and any pneumatic parking brake circuit related with the tractor and does not have reservoirs and ports related with a pneumatic brake system of the tractor.

For the embodiment shown in Fig. 1 there is a trailer control unit 16 (in the following also "TCU") integrated into the air treatment unit. The TCU 16 controls the pneumatic actuation and/or supply of a pneumatic trailer brake circuit 17. In particular the TCU 16 controls the supply of pressurized air to the coupling head 18 for the supply of the trailer with pressurized air and/or the coupling head 19 for the control of the trailer brake. The TCU 16 and/or the air treatment unit 12 control(s) these pressurized air signals in dependence on the brake signals 5, 6 of the tractor.

The electro-mechanical brake system 3 comprises electro-mechanical brake actuators 20a-20d. The actuation of the electro-mechanical brake actuators 20a-20d is controlled in dependence on a tractor brake signal applied by the driver to a braking means as a brake pedal. However, it is also possible that the tractor brake signal is (at least in some operating states) automatically created by a control unit. Pairs of brake actuators 20a-20d are associated with each axle. Fig. 1 shows an embodiment with only two axles whereas a utility vehicle 21, here a tractor 22, might also have more than two axles.

The tractor brake signals controlling the electro-mechanical brake actuators 20a-20d and correlating with the tractor brake signals 5, 6 transferred via the interface 4 to the pressurized air system 2 are created by two redundant brake control units 23, 24 of the electro-mechanical brake system 3. It is possible that the brake control units 23, 24 are built by separate units that might be linked by lines or a network with each other. It is also possible that the brake control units 23, 24 are housed in a common housing or on a common board. Furthermore, it is possible that the brake control units 23, 24 are built by a dual circuit board.

The tractor brake signals 5, 6 are determined or calculated in dependence on the actuation of an actuating means 25 by the driver for the service brake, in particular a brake pedal, and/or an actuating means 26 for a parking brake, here a parking brake lever. The output signals generated by the actuating means 25, 26 according to the actuation by the driver are each transferred by pairs of redundant lines 27a, 27b, 28a, 28b to the two brake control units 23, 24. For one embodiment the lines 27, 28 are analogue lines whereas any other type of line, connection or network might also be used.

The control of the brake actuators 20 will be explained on the basis of the control of one single brake actuator 20b in Fig. 1: both brake control units 23, 24 transfer a tractor brake signal to the brake actuator 20b. For the shown embodiment the brake control unit 23 uses an analogue line 29b, whereas the other brake control units 24 uses a data bus 30b. Furthermore, the brake actuator 20b is supplied with electrical energy by at least one electric supply line 31 b wherein it is possible to switch the supply from of electrical energy from one accumulator to the brake actuator 20b to a supply from the other accumulator to this brake actuator 20b. The switching might be controlled by the brake control units 23, 24 on the basis of a detected energy status of at least one accumulator 32, 33 (see also below).

For the embodiment shown in Fig. 1 the control unit 23 controls brake actuators 20b, 20c located at different axles at different sides of the vehicle via the analogue lines 29b, 29c. The control unit 23 controls the other brake actuators 20a, 20b associated with different axles and different sides of the vehicle via the data buses 30a, 30d. The brake control unit 24 controls the brake actuators 20b, 20c via the data buses 30b, 30c, whereas the brake actuators 20a, 20b are controlled by the brake control unit 24 via analogue lines 29a, 29d. The supply of electrical energy to the brake actuators 20b, 20c via the supplied lines 31b, 31c is controlled by the brake control unit 24. The supply of electrical energy to the brake actuators 20a, 20d via the supply lines 31 a, 31d is controlled by the brake control unit 23.

The electro-mechanical brake system 3 comprises two redundant batteries or accumulators 32, 33. A first accumulator 32 supplies the brake control unit 23 with electrical energy for transferring the electrical energy to the brake actuators 20a, 20d in a controlled way. The accumulator 33 supplies the brake control unit 24 with electrical energy, in particular for the controlled transfer to the brake actuators 20b, 20c.

The electro-mechanical brake system 3 also comprises a generator 34. The electrical energy generated by the generator 34 is transferred via the brake control units 23, 24 to the accumulators 32, 33 for recharging the accumulators 32, 33. The mechanical energy transformed by the generator 34 into electrical energy might be taken from the drive train of the utility vehicle 21 or the movement of the utility vehicle 21.

The tractor brake signals 5, 6 transferred to the pressurized air system 2 and the air treatment device 12 or the TCU 16 depend with a given dependency or function or characteristic diagram from the tractor brake signals transferred to the brake actuators 20a-20d and/or from the manual actuation of the actuation means 25, 26 by the driver. The tractor brake signals 5, 6 are created or computed by the brake control units 23, 24 by considering any a-priory dependency or characteristic from the output signal of the actuation means 25, 26.

The tractor brake signals 5, 6 are transferred to the air treatment device 12 and/or the TCU 16 via input ports 35, 36. It is also possible that at least one of the brake control units 23, 24 additionally communicates via an electrical line 37, in particular a data bus, with the trailer. Furthermore, it is possible that with this electrical line an electrical tractor brake signal is transferred via a suitable interface or plug to the trailer. This embodiment provides to both electrically control the trailer by an electrical control signal transferred via the electrical line 37 as well as to pneumatically control the trailer via the coupling head. This builds a redundant control of the trailer both on an electric path and a pneumatic path. Furthermore, it is possible that the two ways of connecting the trailer with the tractor are used to provide the option of alternatively connecting a pneumatically braked trailer and an electrically braked trailer with one and the same tractor.

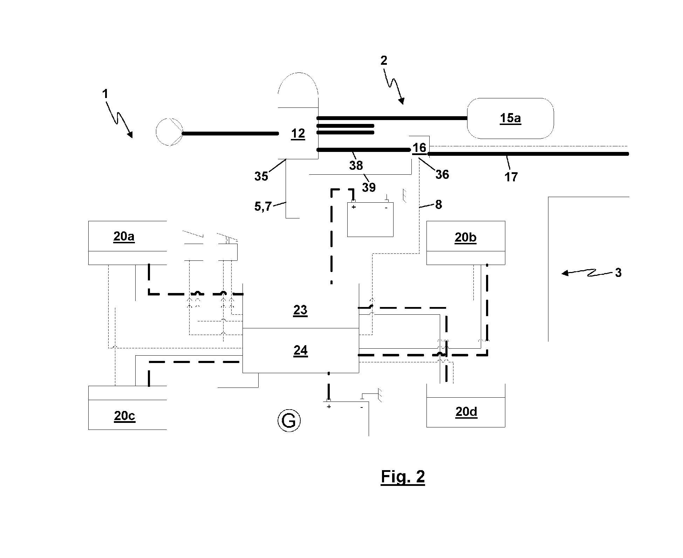

Fig. 2 shows an embodiment of the operating system 1 similar to the one shown in Fig. 1. However, for the embodiment shown in Fig. 2 the TCU 16 is not integrated into the air treatment device 12 but located separately from the air treatment device 12. For this embodiment the input port 36 for the analogue line 8 from the brake control unit 24 is part of the TCU 16. The TCU 16 and the air treatment device 12 are linked by a pneumatic line 38 and by an electrical line 39, in particular a data bus communication using the related ports at the air treatment device 12 and the TCU 16. The pressurized air supplied via the pneumatic line 38 is controlled by the trailer control unit 16 in dependence on the signal on the analogue line 8 for approximating a suitable pressure in line 17 to be transferred to the trailer.

Further embodiments, functions, explanations, transfers of the electrical signals and pneumatic air streams, methods for the control and the like (in particular concerning the generation of a pressure in the line 17 to the trailer in dependence on the tractor brake signal) can be taken from the European patent application of the applicant Haldex Brake Products GmbH with the title "Druckluftaufbereitungseinrichtung für ein Nutzfahrzeug" filed at the same day as the present patent application which is incorporated by this reference into the present patent application.

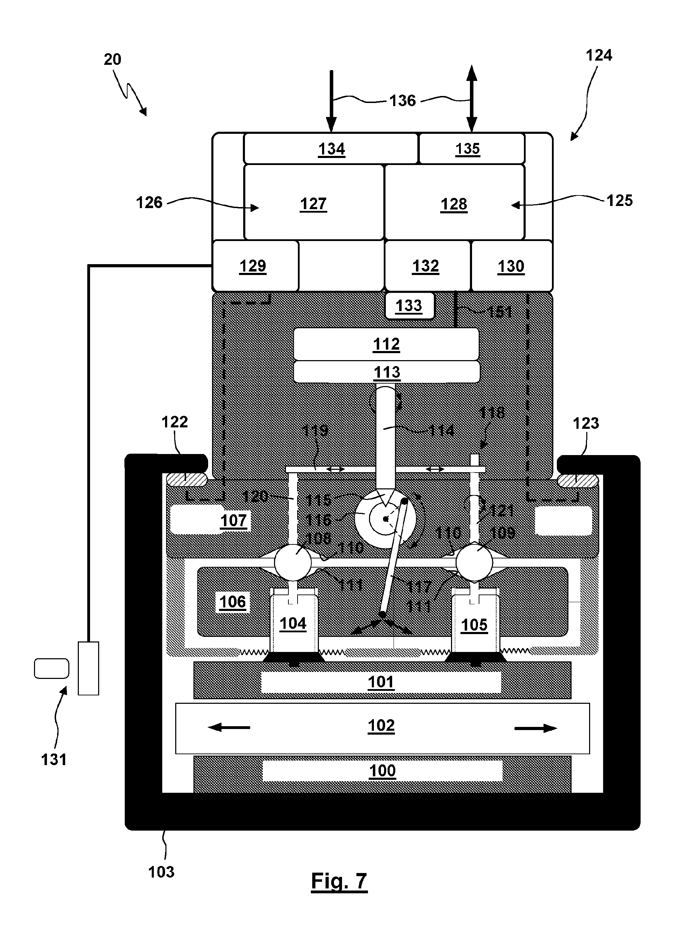

The electro-mechanical brake system 3 for one embodiment builds a brake-by-wire-system for tractors or trucks, intended for the control of electro-mechanical brake actuators 20 that generate the clamp force by an electric motor 112. The electro-mechanical brake system 3 communicates with the brake actuators 20 via a communication bus, for example FlexRay or CAN and with the actuation means 25, 26, in particular brake pedal sensors, and with the I/O-modules that controls switches and lamps on the dashboard of the tractor 22. The system communicates to the dashboard of the tractor 22 via a diagnostic bus. The brake control unit 24 communicates with the vehicle J1939-bus. The system is redundant. It is possible that it has four brake pedal sensors as well as four sensors on the parking brake handle. Additional, it is possible that there are two FlexRay or CAN communication circuits and two power circuits. Furthermore, the brake control units 23, 24 might be equipped with software for basic brake system functions such as service braking, park braking, automatic brake blending that might control the retarders. Furthermore, logic is included into the brake control units 23, 24 and/or the brake actuators 20 for preventing real lock during service braking and engine brake and excessive wheel spin during acceleration. It is possible that the brake actuators 20 or at least some of them have computational power of their own, see control unit 127, 128 in Fig. 7. It is also possible that a wheel speed sensor 131 is directly connected or integrated into the brake actuator 20. Furthermore, it is possible that the wheel speed controlling functions such as traction control and slip control are performed locally by a control unit 127, 128 integrated into the brake actuator 20.

The brake actuators 20 might be built as disclosed in the documents EP 1 925 841 B1, EP 1664 571 B1, DE 103 92 252 T5, DE 11 2004 001 812 T5, DE 11 2004 001 795 T5 and DE 112006 001 595 T5 of the present applicant.

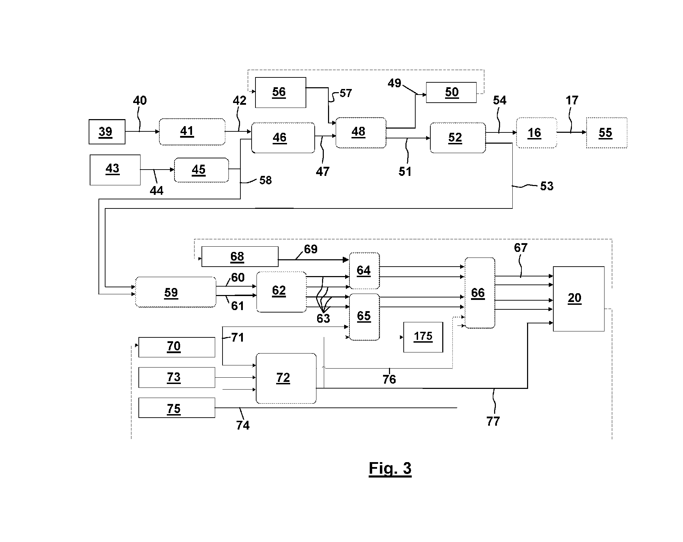

**Fig. 3** shows a simplified flow chart relating to the functions of the electro-mechanical brake system 3 and the cooperation with the TCU 16 and the trailer. An actuation means embodied as a pedal sensor 39 creates as an output a position signal 40. In a step 41 the position signal 40 is transformed by the brake control units 23, 24 by considering a pedal characteristic 91 to a retardation signal 42. In a parallel path a sensor 43 for the pressure in the air spring bellows or for the level of the air spring bellow outputs a signal 44 according to the sensed level or pressure. From the signal 44 in a step 45 the overall mass including the load of the tractor is determined. In a step 46 the retardation signal 42 former determined in step 41 is transformed under consideration of the overall mass resulting from step 45 to a brake force request 47. In step 48 a brake blending is performed for creating a brake command 49 for a retarder 50 as well as a service brake force request 51 input to a distribution step 52.

The main goal of the retarders 50 is to increase pad and disc life of the brakes as well as to reduce the brake temperatures both on the tractor and on the trailer. Furthermore, the retarder might be used to produce an increased brake force at instances where a monitored energy status of at least one accumulator 32, 33is low. With the brake blending performed in step 48, the endurance braking systems are invoked automatically when possible and the function is enabled by putting the retarder stalk arm in "automatic"-position. When the driver commands braking with automatic blending enabled, the brake force request is divided in such a way that both service braking system and endurance braking systems are applied simultaneously. The retarder 50 might be an engine retarder and/or an exhaust retarder. The endurance braking demand value is sent via the J1939 CAN-bus. The brake system is also listening to the response from the retarders on the same bus and corrects the service brake command and trailer brake command such that the demanded retardation will be reached.

The distribution step 52 determines both a tractor brake force request 53 and a trailer force request 54 in dependence on the service brake force request 51. The trailer force request 54 is fed to the trailer control unit 16 creating a pressure in line 17 supplied via the coupling heads to the trailer 55. An output signal of the retarder 50 is used as a control signal and supplied to a step 56 for auxiliary diagnoses creating a retarder brake force signal 57 also input into step 48 for consideration for determining the service brake force request.

The tractor brake force request 53 and a tractor mass signal 58 are input to a step 59 for the axle distribution load apportioning creating a front axle load apportioning signal 60 and a rear axle load apportioning signal 61. The dynamic vertical load distribution on the vehicle axles changes continuously with the cargo position and retardation and braking. The load apportioning function executed in step 59 distributes the brake forces in proportion to the vertical force working on each axle. The mass of the vehicle and the position of the centre of gravity are determined from the air bellow pressure or the air bellow levels. From the vehicle specification the centre of gravity and the weight of the empty truck are known. The extra load on the rear axle is assumed to come from the cargo. The tractor cargo is assumed to be centred along a certain position in longitudinal direction of the tractor, while its height increases with the load amount. Then, respective axle load is calculated according to a model using the centre of gravity position, the geometrical data of the vehicle units and the retardation measurements. In a subsequent step 62 the transverse distribution is determined resulting in signals 63 for the left-front-brake-demand, right-front-brake-demand, left-rear-brake-demand and right-rear-brake-demand 63.

Via the units 64, 65, 66 a demand for a brake force signal or brake torque signal 67 is created which is transferred to the brake actuators 20. Unit 65 also generates a signal to be considered by the vehicle engine 175. The brake force created at the brake actuators 20 is indirectly sensed by a clamp force sensor 68. The generated clamp force signal 69 is used by unit 64 for control purposes. In the brake actuators 20 a wheel speed sensor 70 generate a wheel speed signal 71 used for control purposes in unit 65 as well as in a step 72 for estimating the vehicle state. The step 72 also receives signals from an electronic stability control sensor 73 and a steer angle signal 74 from a steer angle sensor 75. Step 72 creates a vehicle motion signal 76 transferred to unit 66 for control purposes and a wheel speed reference signal 77 transferred to the brake actuators 20. The wheel speed reference signal 77 is also transferred for control purposes to unit 65.

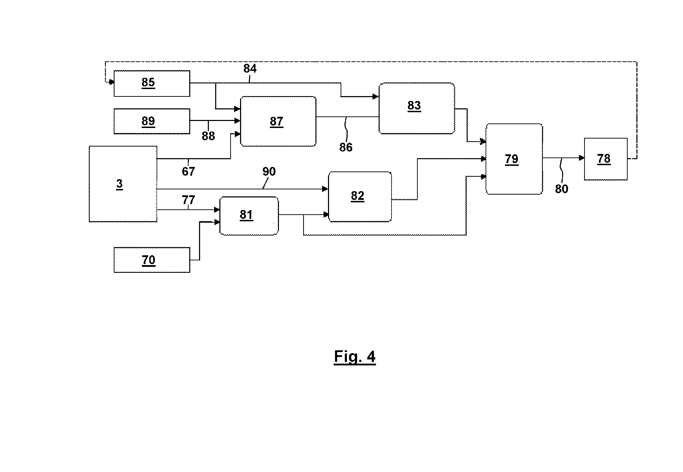

Fig. **4** shows a simplified flow chart of signals and the control in the brake actuators 20 itself with at least one control unit 127,128 integrated into the brake actuators 20 and the related software. In the brake actuator 20 the created brake force depends on the position or the driving activity of an electrical motor 78, 112. A mode handler 79 determines a motor torque signal 80, i.e. the control signal for the motor 78, 112. The motor torque signal 80 is controlled by the mode handler 79 in dependence on the output of a slip calculator 81, a slip controller 82 and a position controller 83. The position controller 83 creates its output from a position signal 84 created by a motor position sensor 85, 113. The position controller 83 besides the position signal 84 considers a position request 86 determined in a step 87 for an elasticity estimation. The step 87 for the determination of the position request 86 considers the position signal 84, a clamp force signal 88 determined by a clamp force sensor 89 (see also 122, 123 in Fig. 7) as well as the brake force signal 67. The slip controller 82 considers a slip request signal 90 from the electro-mechanical brake system 3 or the brake control units 23, 24 and the output of the slip calculator 81 on the basis of the wheel speed reference signal 77 and the output of the wheel speed sensor 70, 131.

As shown in Fig. 1 the brake pedal stroke is transferred to a retardation request, which is recalculated and distributed to the brakes as brake torque requests. It is possible to graduate the braking. The system is designed to be able to give a total braking force of at least 110kN per axle within 0.3 seconds. Due to the redundancy of components and communication between the brake control units 23, 24 and the brake actuators 20, a single fault on the control lines will not effect the service brake performance. Furthermore, the components of the control circuit, in particular the control units 23, 24 and control units 127,128 of the brake actuators 20, have diagnostics and there are means to monitor the transmitted signals such that failure will be detected directly and indicated to the driver. The brake actuators 20 measure the applied brake force and can supervise the condition of the brake pads. A power distribution module (PDM) in the system, in particular in the brake control units 23, 24, supervises the condition of the accumulators 32, 33 and will warn the driver if the function of the system is deteriorated. Even the energy source is redundant in that there are two accumulators 32, 33 dedicated to the electro-mechanical brake system 3. If both accumulators 32, 33 become weak, a power control module can make use of energy from the vehicle accumulator. It is possible that automatically in case of both accumulators being weak unneeded or auxiliary systems are switched of in a given order depending on safety criteria. This is in particular the case if the overall voltage of an accumulator or both accumulators is below a threshold level.

The brake actuators 20 might also receive a parking brake request through the electro-mechanical brake system 3 from the parking brake lever 26 which is placed so that it can be reached from the driver's seat. When the parking brake is applied an electro-magnetic clutch is disengaged and the mechanically stored energy from the parking spring unit is released. The parking spring unit is acting with a constant torque on the motor shaft 114 that applies the brake to a parking brake level to keep the vehicle at standstill by purely mechanical means.

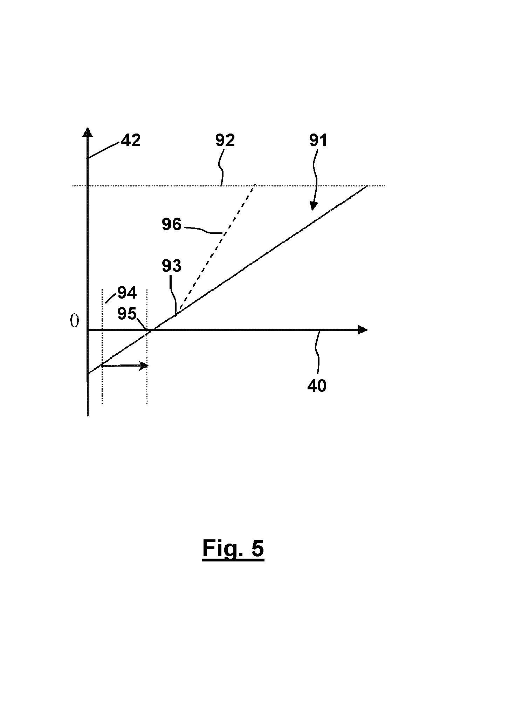

**Fig. 5** shows a pedal characteristic 91 describing the retardation signal 42 as a function of the pedal position signal 40. Here, any pedal characteristic 91 with linear, stepped and/or curved dependency might be used. In the pedal characteristic 91 shown in Fig. 5 the retardation is limited to a maximum 92. The pedal characteristic 91 shows for small pedal position signals 41 negative values used for controlling the slack. For a normal brake actuation the pedal characteristic 91 follows the straight line 93. Only in cases when the brake pedal is pressed very fast resulting in a short time interval between the positions 94, 95 the inclination of the pedal characteristic 91 is increased to a second straight line 96 resulting in a lager retardation signal 42.

Within the slip controller 82 wheel lock is avoided by controlling and limiting the wheel slip to prevent vehicle instability during braking particularly under slippery surfaces. The control of the wheel speed is managed locally within each brake actuator 20. The system provides the reference speed (calculated from the estimated vehicle speed) for each wheel and also under some conditions a target slip. The wheel speed sensors 70, 131 are connected directly to respective control units 127,128 and/or to the brake control units 23, 24 to minimize the control and time delays.

The system prevents sudden large brake force differences between the left and right wheels on the front axle due to different road friction under respective wheels, so called split friction. If the friction is low on one side and the driver brakes hard the brake forces may become asymmetrical. The driver may lose the control of the steering wheel and also the entire vehicle. The systems helps the driver to limit the rate for how the left and right brake forces can diverge. If split friction during braking occurs the brake on low friction side will start to control the wheel slip. To the high friction side system limits the brake force demand based on the brake forces on the low friction side. Then, it slowly increases the brake demands to the high friction side. The brake force on the high friction side will be raised to its demand or maximum value, but sufficiently slows so that the driver has time and the possibility to counter steer.

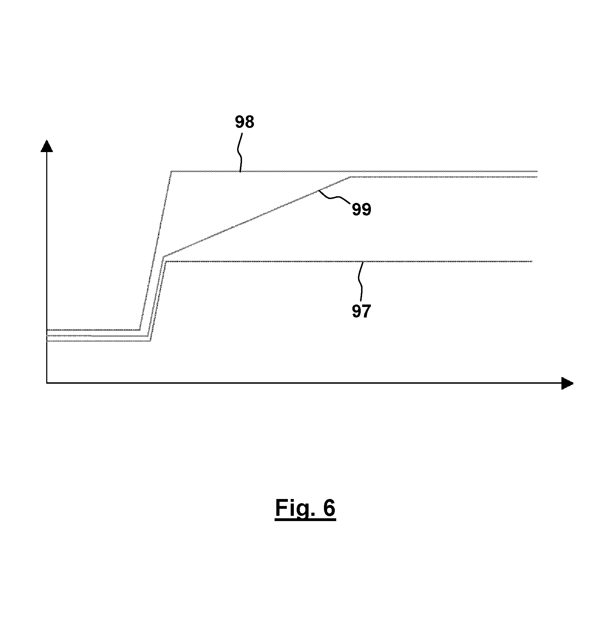

**Fig. 6** shows the brake force over time during split friction. Here, curve 97 shows the physical limit due to low friction at the wheel on low friction road, whereas curve 98 shows the pedal demand correlating with position signal 40. Curve 99 shows the rate limitation to avoid oversteering with in the end the friction at the wheel on high friction road.

The electro-mechanical brake system 3 also may prevent excessive wheel slip when the tractor is accelerating. The wheel control is managed by a local slip controller 82 within respective brake. A controller in the system software limits the accelerating engine torque. Traction control performed by the brakes is an auxiliary function which is according to one embodiment only active if the energy capacity, so the capacity of the accumulators 33, 32, is sufficient. It is also possible, that the brake control is only active below 40km/h. There is a special "off-road" mode on the traction control function that may be commanded by the driver by a push button on the dashboard. The "off-road" mode allows higher slips on the driven wheels.

Engine braking can in slippery conditions and in low gears cause too high brake slip on the driven wheels. To avoid vehicle yaw instability, the system will demand a torque from the engine to control and limit the wheel slip in such occasion. Also a roll-over control and a directional stability control might be integrated in the software of the control units, in particular brake control units 23, 24 and/or control units of the brake actuators 20 itself.

Furthermore, a pad wear monitoring or control might be integrated with the purpose to provide an advance warning to the driver or mechanic of a low pad thickness condition. It is also possible to provide information to the control units relating to pad wear to enable adjustment to the brake distribution to equalize wear. It is also possible to provide an indication of a defective brake (e.g. slide pins stuck). The brakes have a pad wear sensor that measures the position of the brake pads 100, 101 or relative components. In particular the wear sensor measures the position of the adjustment screws or of distance means 104, 105 so that the average wear can be measured over both brake pads 100, 101. If there is a bias of one brake pad 100, 101 over another (due to vehicle operating environment, e.g. an outer pad may always wear more than the other) this may lead to a false reporting of "good brake pads".

It is also possible that operating states of any component or of internal signals are stored so that it is possible to analyse failures later in time.

**Fig. 7** schematically shows a brake actuator 20 basing on a self-amplifying principle. In the brake actuator 20 two brake pads 100, 101 are pressed in an actuating direction corresponding to the axis of rotation of the brake disc 102 in opposite directions against the brake disc 102. It is possible that the brake actuator 20 is fixedly attached to the vehicle chassis which means that the brake disc 102 must have a certain (although limited) axial movability in relation to the brake disc 102, mainly in the practical case in relation to its shaft. However, in other embodiments the brake actuator 20 may be of the so called floating type for cooperation with an axially fixed brake disc 2. The brake pads 100, 101 are attached to brake pad holders (not shown in Fig. 7). Brake pad 100 with the related holder is attached to a brake yoke 103.

By adjustable distance means 104, 105 the brake pad 101 (and the related holder) are attached to a ramp plate 106. The ramp plate 106 is in turn connected to a ramp bridge 107 by means of rollers 108, 109 building a rolling contact with ramps 110, 111 on the ramp plate 106 and the ramp bridge 107, respectively. The rollers 108, 109 are preferably arranged in a common roller cage (not shown) for obtaining full control and completely synchronised movement of the rollers 9 (irrespective of their actual number). The need for a roller cage is especially relevant, if the ramps 110, 111 are curved for obtaining certain brake characteristics.

The ramp bridge 107 is fixedly attached in the vehicle chassis and is provided with means for creating a control force and for maintaining a certain predetermined slack between on one hand the brake disc 102 and on the other hand the brake pads 100, 101.

An electric motor 112 with a transmission 113, in particular a planetary gear, can rotate a motor shaft 114 in either direction. The transmission 113 is used for reducing the rotational speed of the motor 112. It is also possible that the transmission might include a parking and safety brake arrangement.

A bevel gear 115 arranged on the motor shaft 114 is in driving gear engagement with a bevel gear disc 116 rotationally supported by the ramp bridge 107. Eccentrically connected to the bevel gear disc 116 is a crank rod 117 pivotally connected to the ramp plate 106.

By turning the bevel gear disc 116 in either direction by means of the bevel gear 115 from the motor 112, the position of the ramp plate 106 in relation to the ramp bridge 107 can be set. When a friction engagement between the brake pad 101 (and brake pad 100) and the brake disc 102 has been established (over the distance means 104, 105 between the ramp plate 106 and the brake pad holder) an application force amplification will be accomplished by the rollers 108, 109 climbing the respective ramps 110, 111 in response to a tangential movement of the ramp plate 106 caused by the friction engagement with the brake disc 102. The application force may be accurately controlled by rotating the motor 112 in either direction.

By means of motor 112 or an additional motor a slack adjusting arrangement 118 is driven over a drive belt 119, a drive chain or the like. In case of using motor 112 for driving the drive belt 119 an additional transmission, an electromagnetic clutch and a drive sprocket might be arranged in the force flow between the motor 112 and the drive belt 119. In this case the electromagnetic clutch might only be engaged when a slack adjustment is desired. The drive belt 119 drives rods 120, 121 for a rotational movement. However, the driving connection of the rod with the drive belt 119 as well as with other components is designed such that a rotational adjusting movement of rods 120, 121 may be transmitted in spite of relative movements between the ramp plate 106 and the ramp bridge 107. The end regions of the rods 120, 121 opposite to the drive belt 119 are linked with distance means 104, 105 for transferring the rotational movement. The distance means 104, 105 are screwed into the ramp plate 106. Accordingly a rotational movement of the distance means 104, 105 caused by the rotation of the rods 120, 121 leads to a change of the distance of the brake pad 101 (and brake pad 100) from the brake disc 102. Such change of the distance might be used for an adaptation process for decreasing thicknesses of the brake pads 100, 101 due to wear. Two force sensors 122, 123 are located in the force flow between the ramp bridge 107 and the brake yoke 103 in axial direction. The force sensors 122, 123 in a redundant way measure the clamp force so that the signals of these force sensors 122, 123 correlate with the signals of the clamp force sensor 89 in the former figure. The force sensors 122, 123 might be of any suitable kind. The output signal of the sensors 122, 123 can be used for feedback at braking for controlling the electrical motor 112. At the application of the brake actuator 20, as controlled by the motor 112 via the crank rod 117, the brake pads 101, 100 will be applied against the brake disc 102, which can be supposed to be rotating in forward direction in Fig. 7 to the left and in backward direction in Fig. 7 to the right as shown with the arrows. The brake actuator 20 has a self-servo effect, wherein the brake application force will be controlled by the motor 112. The ramp plate 106 with the elements connected there too, for example the brake pad 101, has to be movable to a certain extend in the rotation direction of the brake disc 102 for allowing the rollers 108, 109 to move along the ramps 110, 111.

A torsional moment is created on the brake pad 101 during braking. This moment is striving to rotate or tilt the brake pad 101 around an axis which is parallel to the axis of the brake disc 102 and normally within the friction surface of the brake pad. Care is taken to this moment. A guiding is accomplished for the brake pad 101 and thus for all elements connected thereto, especially the ramp plate 106, while not negatively influencing the movements required for the self-servo effect of the brake actuator 20.

Integrated into the brake actuator 20 is an electronic unit 124. The electronic unit 124 includes two separate parts 125, 126. The parts 125, 126 each comprise a control unit 127, 128 and a sensor interface 129, 130 respectively. The sensor interface 129 receives signals from the force sensor 122 as well as a wheel speed sensor 131. The sensor interface 130 receives the output signal from force sensor 123. The part 125 also comprises a motor interface 132 connected with the motor 112. The motor interface 132 (or the sensor interface 130) of part 125 might also be connected with a position sensor 133 sensing the angular position of the motor 112, an element of the transmission 113, the angular position of motor shaft 114 or other driven elements. The electronic unit 124 comprises an electric power supply 134 and a bus communication 135 both linked by an interface 136 with the brake control units 23, 24.

The geometry of the ramps 110, 111 is optimized for a certain pad-disc-friction-characteristic, which might be optimized so that there is no torque required from the motor 112 to keep the clamp force steady. If the friction is higher than this, the brake becomes self-locking and the motor 112 has to work for releasing the brake pad 100, 101. It is possible that one force sensor 122 is connected to a control unit 127, 128 of the brake actuator 20, whereas the other force sensor 123 is connected with the brake control unit 23, 24. Furthermore, it is possible that the brake actuator 20 has two separated processors or control units 127, 128 for sensor signal processing and control which can validate each other.

For further details concerning possible embodiments of a brake actuator 20 with a self-amplifying effect see related patents of the applicant as DE 11 2006 001 595 T5, see also EP 1925 841 B1, EP 1 664 571 B1, DE 10392252 T5, DE 11 2004 001 812 T5, DE 11 2004 001795 T5.

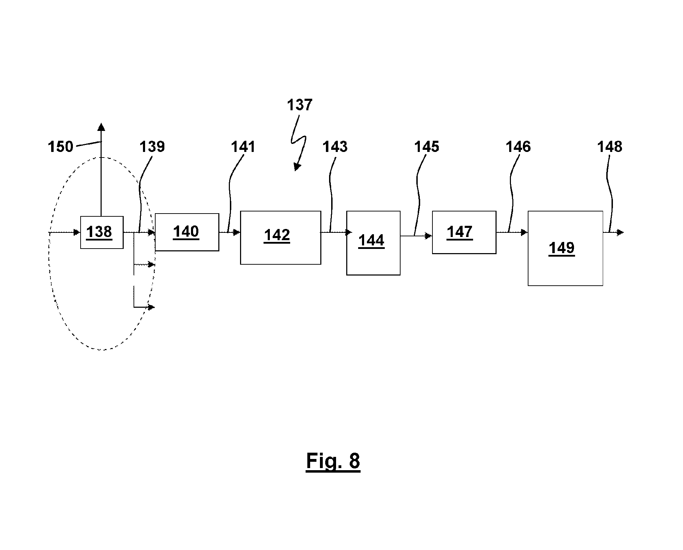

Fig. 8 schematically shows a conventional pneumatic brake system 137 wherein an EBS control unit 138 creates a pneumatical brake pressure 139. The brake pressure 139 acts on a piston 140 of the pneumatic brake actuator causing a piston force 141 via a brake mechanism 142. The piston force 141 is transformed into a clamp force 143 pressing the brake pad 144 against the brake disc 102 resulting in a frictional force 145 between the brake pad 144 and the brake disc 102. The applicable brake torque 146 depends on the frictional force 145 and the brake geometry 147. Finally, the actual brake force 148 depends both on the brake torque 146 as well as the wheel geometry and the road/tire-friction 149. For prior art pneumatic brake systems 137 the brake force being of interest is estimated on the basis of an output signal 150 of the EBS control unit 138 or the brake pressure 139 measured in a line supplying the brake pressure 139 to the piston 140. The estimated actual brake force 148 depends on a model of the whole chain of the components located between the line with the brake pressure 139 and the actual brake force 148 - in case of any inaccuracies of the used model the estimated brake force differs from the actual brake force 148. It has been observed that deviations might also depend on operational states of the pneumatic brake system 137. To name only some nonlimiting examples linear or non-linear changes in the characteristics of the brake mechanism 142, a change of the brake pad due to wear, a change of the frictional characteristics between the brake pad and the brake disc, changes in the brake geometry 147 and/or changes in the load-tire friction 149 might be a reason for a deviation of the estimated brake force from the actual brake force 148 for these prior art systems.

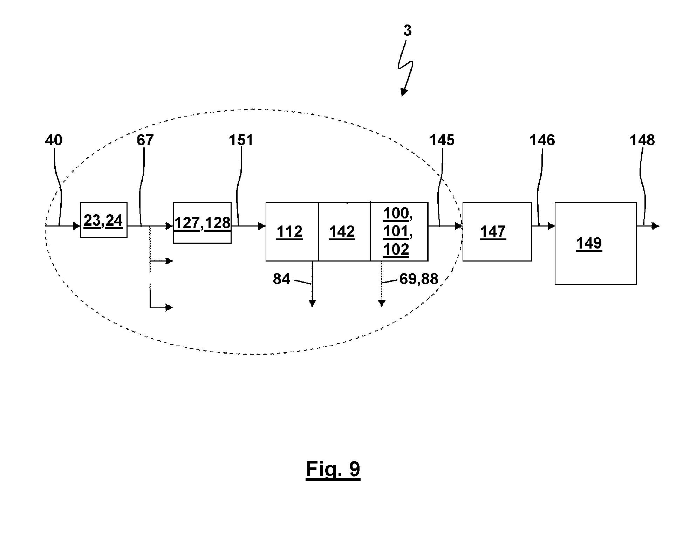

Fig. 9 schematically shows an electro-mechanical brake system 3 wherein, with additional steps as described above, a brake control unit 23, 24 determines a brake force signal 67 from a position signal 40 of a pedal sensor 39. The brake force signal 67 is transferred to the control unit 127, 128 of a brake actuator 20. The control unit 127, 128 via the interface 132 determines a motor control signal 151 used for controlling the motor 112. The motor 112 via the brake mechanism 142 changes the clamp force 69 between the brake pad 100, 101 and the brake disc 102. As explained for Fig. 8 the frictional force 145 is transformed by the brake geometry 147 to a brake torque 146. The actual brake force results from the brake torque 146 under consideration of the brake and wheel geometry and the road-tire friction 149.

The estimated brake force is determined under consideration of the clamp force 69, 88 measured by a clamp force sensor 89 or the two clamp force sensors 122, 123. Any inaccuracies, non-linearities or influencing effects occurring "upstream" in the transfer path of Fig. 9 do not lead to an error in the estimated brake force. Whereas it is also possible that the estimated brake force is solely determined on the basis of the clamp force with a reduced model considering the friction characteristics between the brake pad 100, 101 and the brake disc 102, the brake geometry 147, the wheel geometry and the road-tire friction 149, it is also possible that additionally a position signal 84, the motor control signal 151, an electric control signal in the control units 127, 128, the brake force signal 67, a control signal in the brake control unit 23, 24 and/or a position signal 40 of a pedal sensor 39 is used for estimating the brake force brake torque or for a verification and/or correction or adaptation of an estimated brake force or brake torque.

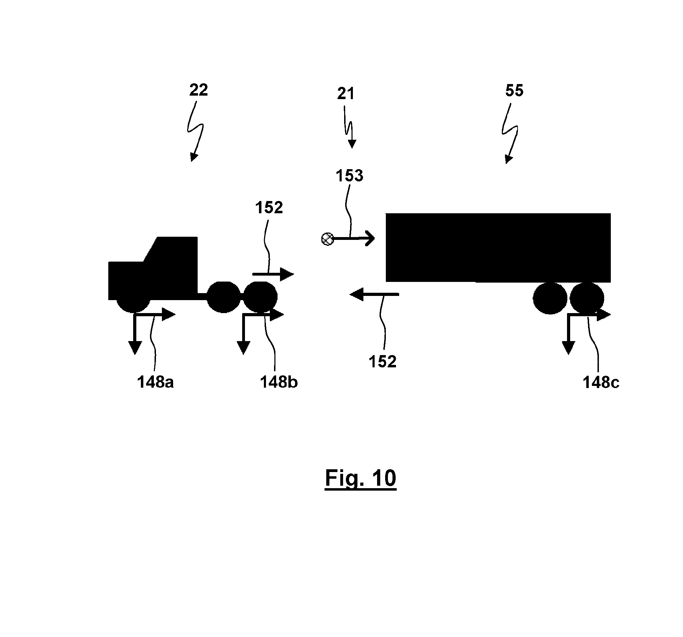

Fig. 10 shows a free body diagram of a tractor-trailer combination with a tractor 22 and a trailer 55. The free body diagram shows the coupling force 152 between the tractor 22 and the trailer 55, actual brake forces 148a, b, c at the wheel and axles and the inertial force 153.

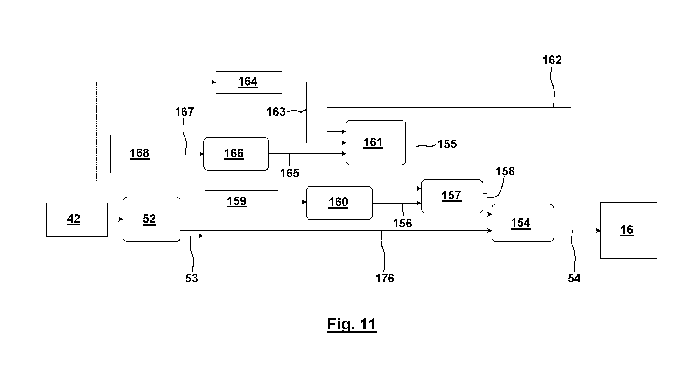

Fig. 11 shows schematically a block diagram for determining a trailer force request 54 for the trailer control unit 16. The scope is to control the trailer force request 54 such that for a given retardation signal 42 the coupling force 152 equals a desired coupling force, e.g. a zero coupling force. According to Fig. 11 in the distribution step 52 besides the tractor brake force request 53 an auxiliary trailer force request 176 is determined. The auxiliary trailer force request 176 is transformed on the basis of a trailer brake model 154 to the trailer force request 54. The trailer brake model 154 incorporates the dependency of a trailer brake force from a trailer force request 54 transferred to the TCU 16. For an optimal control of the trailer force request 54 a predicted retardation 155 equals the actual measured retardation 156 so that in a trailer brake correction step corrections 158 transferred to the trailer brake model 154 are not necessary or the correction is a zero correction. The actual retardation 156 is determined on the basis of a vehicle motion sensor 159 and a vehicle state estimator 160. The predicted retardation 155 is calculated by a retardation predictor 161 that considers a trailer brake force prediction 162 of the trailer brake model 152 and actual brake forces 163 determined from brake force sensor 164. It is possible that the brake force sensor 164 directly measures a brake force 163 in a brake actuator 20. However, according to a preferred embodiment the brake force 163 is determined on the basis of a measured clamp force 69, 88 (and additional signals as shown and described for the schematic block diagram of Fig 9). Furthermore, the retardation predictor 161 considers the vehicle mass 165 and/or the position of the centre of gravity. These static or dynamic parameters are determined by a vehicle mass estimator 166 from the pressure 167 measured by a bellow pressure sensor 168.

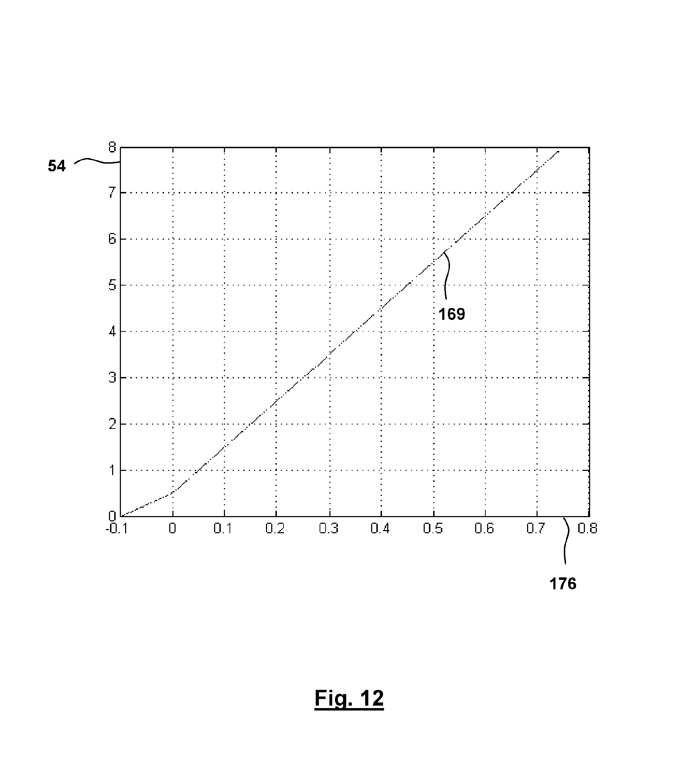

**Fig. 12** shows a characteristic 169 with the trailer force request 54 over the auxiliary trailer force request 176. The curvature of the characteristic 169 considers the dependency of an actual brake force at the trailer from the trailer force request 54, i.e. a controlled pressure produced by the trailer control unit 16 and transferred by the coupling head to the pneumatic brake circuit of the trailer. The characteristic 169 is implemented into the trailer brake model 154. When cutting the input of the correction 158 into the trailer brake model 154 the trailer brake request 54 would be solely dependent on the auxiliary trailer force request 176. However, in case of the predicted retardation 155 differing from the actual retardation 156 this difference observed by the trailer brake correction step 157 is used as an indicator that the braking action at the trailer does not have the desired amount which is also an indicator that the coupling force 152 differs from a desired coupling force. According to the amount and/or quality of the correction 158 output from the trailer brake correction step 157 the trailer brake model 154 additionally to the characteristic 169 considers correction factors 170, 171. For one embodiment these correction factors 170, 171 are dependent on the auxiliary trailer brake request 176 or the first approximation of the trailer brake request 54.

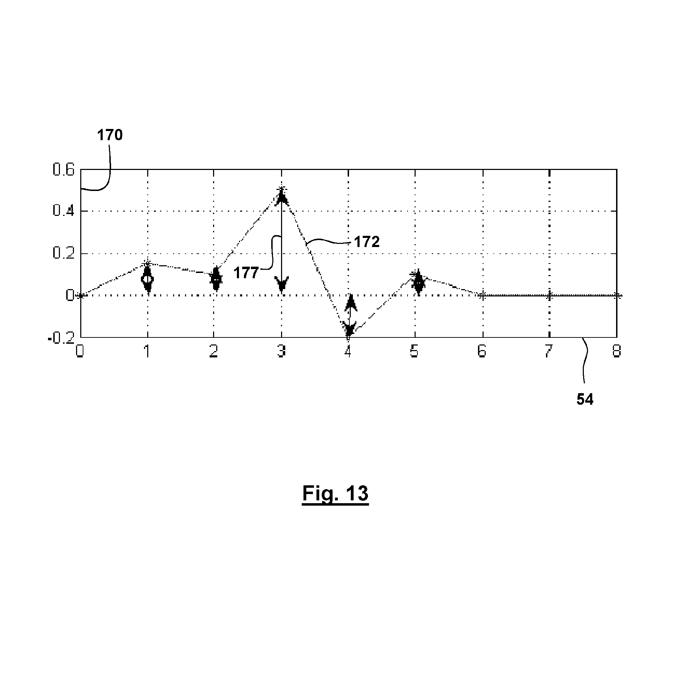

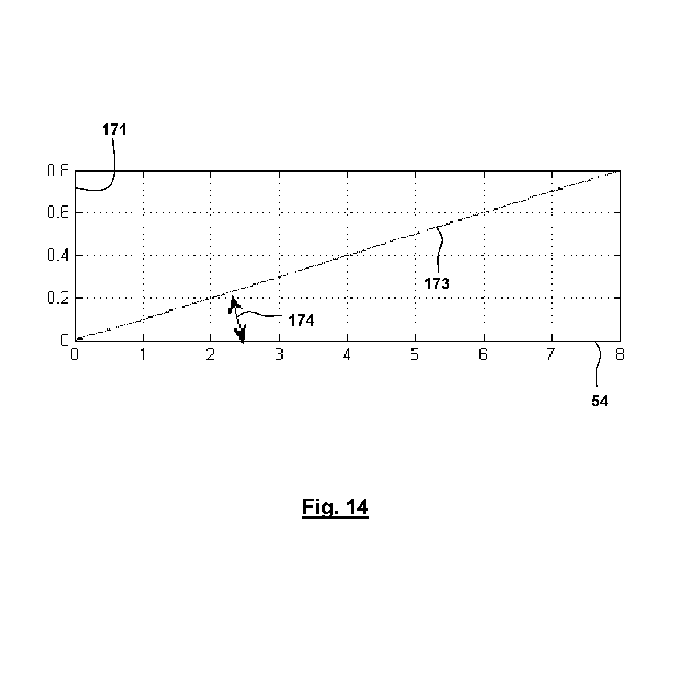

**Fig. 13 and 14** show characteristics 172, 173 of the correction factors 170, 171 on the trailer brake request 54 given as a pressure in bar. Here, the characteristic 172 comprises linear sub-intervals whereas the corners of the characteristic 172 are determined at given brake force requests 54 and the straight lines between the corners are interpolated. Fig. 14 shows a linear characteristic 173 with a given slope 174. It is possible that the characteristics 172, 173 are determined during the us of the vehicle and/or adapted throughout the use of the tractor-trailer combination. However, it is also possible that the characteristics 172, 173 are a-priori given and stored.

The method for controlling the brake actuation of a brake system of a tractor towing a trailer might base on the longitudinal force equilibrium equation. This equation relates the forces working on the tractor and the trailer with the vehicle combination retardation, see Fig. 10. These forces are for instance the rolling resistance, the air drag, gravity if the road has a gradient, the driving and braking forces on the wheels from the brakes or drive train. One simplified longitudinal force equilibrium equation is as follows:

$$m_v a_x = \Sigma\, F_{Tractor,\, i} + F_{Resistance} + m_v g \alpha + F_{Trailer}.$$

The brake forces at the wheels of the trailer $F_{Tractor,\, I}$ are determined from the brake actuators 20, in particular under consideration of the clamp force 88. The rolling resistance and the air drag ($F_{Resistance}$) can be estimated during rolling and the road gradient $\alpha$ may be neglected if the function may run for a longer period. On the basis of a comparison of the estimated and the actual retardation the brake request for the brake actuators 20 of the tractor and/or the trailer brake request can be adjusted so that the braking of the tractor-trailer combination gets well harmonized. For a simplification the difference in friction between the two brake pads 100, 101 can be neglected. As shown in Fig. 13 the range of the trailer force request 54 is divided into smaller intervals. To each interval a correction factor 177 is assigned. During braking with a certain retardation signal 42 the correction factor belonging to this interval is updated.

For one embodiment the longitudinal force equilibrium equation considers a brake force created by at least one retarder 50. The brake force of the retarders 50 can be determined by the retarder itself or can be considered on the basis of the brake command signal 49 or a signal output with the step 48 of brake blending.

For another embodiment the trailer brake request 54 is calculated under consideration of an operating state of the electro-mechanical brake system 3, the actuators 20 and/or the accumulators 32, 33. In case of an indicator signalizing that the electro-mechanical brake system 3 does not work properly it might be helpful to increase the trailer brake request 54 in order to brake the tractor-trailer combination with a larger brake distribution to the trailer. To mention only one example this might be used for operating states wherein the energy status of the accumulators 32, 33 is low.

The above applies both to a vehicle combination comprising a semi-trailer or a trailer which (unlike a semi-trailer) completely supports its own load. Furthermore, the above also applies to a vehicle combination comprising more than one trailer.

In the drawing and the specification at some places different reference numerals have been used for the different embodiments of the same component, the same method step and/or the same force or signal. Despite different reference numerals being used in these cases it is possible to combine features of different figures and embodiments by linking the same elements, method steps, force or signal in one figure with one reference numeral with the corresponding element, method step, force or signal in another embodiment.

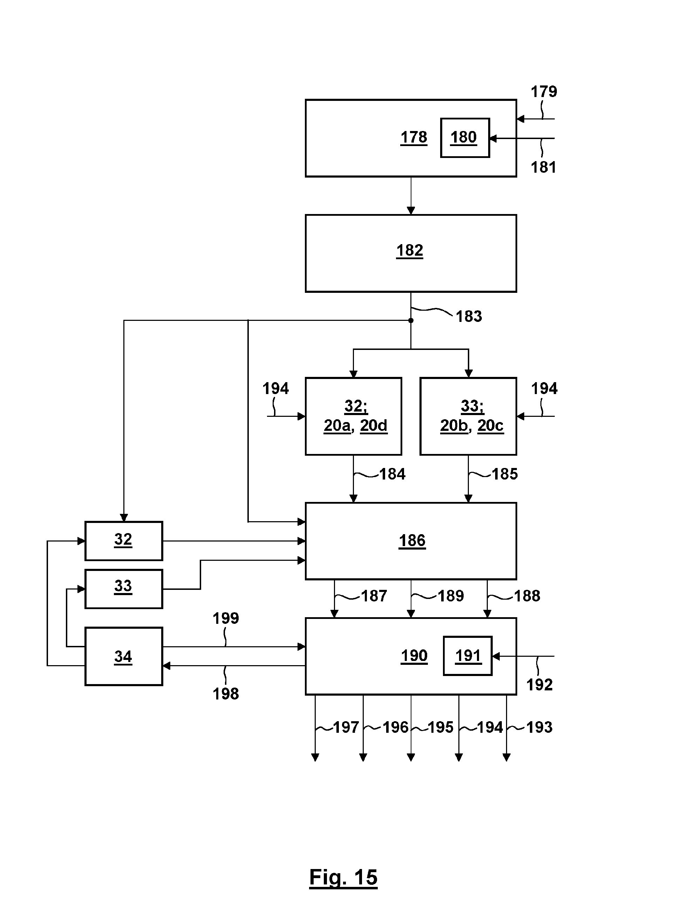

**Fig. 15** shows a schematic block diagram of an inventive method for monitoring the energy status of the two accumulators 32, 33. In a step 178 the monitoring process is triggered wherein it is possible that the monitoring process is triggered in dependence on a specific operating state 179 of the vehicle. It is also possible that the monitoring process is repeated after a time interval 180. It is possible that the time interval 180 is a fixed time interval. However, the time interval 180 might also depend on an operating state 179 or on other parameters 181, e.g. depend on a former determined energy status of at least one of the accumulators 32, 33. In a subsequent step 182 a test signal 183 is created which is used for directly or indirectly building a load for at least one of the accumulators 32, 33. It is possible that the test signal 183 is used as a brake forced signal for actuating the electro-mechanical brake actuators 20 resulting in a load of the accumulators 32, 33. Such application of the test signal 183 causes responses 184, 185 of the accumulators 32, 33. In a step 186 from the responses 184, 185 an energy status 187 of the accumulator 32 and an energy status 188 of the accumulator 33 are calculated. It is possible that in the step 186 also the test signal 183 and the relation between the test signal 183 and the responses 184, 185 is considered for determining the energy status 187, 188. Furthermore, it is possible that a mixed energy status 189 is calculated including the sum of the energy status 187, 188 or any correlation between these two energy status 187, 188. In a step 190 the energy status 187, 188, 189 is/are evaluated for determining whether the energy status is sufficient for a safe drive of the vehicle and/or additional measures are required for recharging the accumulators 32, 33 and/or for changing the energy consumption of the different consumers of the vehicle and/or for initiating a safety drive mode. For one embodiment, in step 190 at least one of the energy status 187, 188, 189 is compared to a threshold value 191 wherein the threshold value 191 correlates with an energy status building a lower limit for a safe drive of the vehicle. Here, the threshold value 191 might be dependent on other parameters 192 or operating states. In step 190 measures are automatically taken in case that on the basis of the energy status 187, 188, 189 it is determined that the energy level is low. A control signal 193 might be created for controlling an additional consumer and/or function for decreasing the energy consumption. Furthermore, a control signal 194 might be created changing the application of the electro-mechanical brake actuators 20, e.g. changing the speed of the motor for applying the brake or for reducing the brake application in case of other brake measures being taken. Furthermore, it is possible that a control signal 195 for a retarder is created for creating a partial brake force with the retarder and providing the option of decreasing the brake force caused by the electro-mechanical brake actuators 20 for reducing the consumption of electrical energy. Also possible is that a control signal 196 is created for setting a speed limit of the vehicle. Another control signal 197 might be created for controlling the drive train or the gearbox for a downshift for increasing the inertial brake moment. It is also possible that in step 190 a warning for the driver, e.g. an acoustic warning signal or a optical warning signal at the driver's cabin, is created. Furthermore, it is possible that a control signal 198 for the generator 34 is created for activating the generator 34 or increasing the electrical output of the generator 34 for recharging the accumulators 32, 33. It is also possible that a signal 198 representing the operating state or output of the generator 34 is considered in step 190 wherein a signal 199 indicating a large energy supply from the generator 34 coinciding with low energy status 187, 188, 189 can be taken as a measure for a defect in the electro-mechanical brake system 3. At least a part of the steps shown in Fig. 15 are performed by the brake control unit 23 and/or the brake control unit 24 and/or by the trailer control unit 16.

Any control signal or measured signal or auxiliary signal explained for the Fig. 1 to 14 might be considered in the inventive method. In the following, only some examples are mentioned:

It is possible that the inventive method also considers the signal from a position sensor 40 of the brake pedal 39 wherein the brake force demand by the brake pedal might be processed under consideration of the energy status 187, 188, 189 and transferred to the brake actuators 20 and other braking devices as the drive train with the gearbox, a retarder, a generator and the like.

Furthermore, the inventive method might consider a retardation signal 42 and/or a brake force request 47. Furthermore, the step 48 of the brake blending for creating the brake command 49 for the retarder 50 and the service brake request 51 might be integrated into the inventive method. Also the distribution step 52 for dividing the required brake force to a tractor brake force request 53 and a trailer brake force request 54 in dependence on a service brake force request might be integrated into the inventive method. For this embodiment in cases where there is an indication that the energy status 187, 188, 189 is low or not sufficient, in the distribution step 52 an increased trailer brake force request might be created leading to a reduction of the tractor brake force request so that the tractor-trailer-combination is to an increased extent braked by the trailer leading to a braking coupling force between the tractor and the trailer. This might only apply in case of an emergency situation.

It is also possible that the inventive method influences

- the signal generated by unit 65 to be considered by the vehicle engine 175,
- a set maximum speed,
- a throttle valve opening or

- the engine speed.

Furthermore, in step 190 a control signal might be caused for influencing the drive characteristics or velocities of the electrical motors 78, 112, for influencing the motor torque signal 80, for influencing the stability control and/or slip control. As mentioned above, besides the brake control unit 23, 24 a power distribution module might be influenced by the inventive method for supervising the conditions of the accumulators 32, 33. It is also possible that the inventive method cooperates with a brake pad wear monitoring. E.g. in case of detecting an increased wear of a brake pad, a test signal applied to the actuators 20 and the pads might be changed. Further influencing parameters might be the operating state of the electric motor 112, the transmission 113 of the brake actuators 20 and/or of force sensors 122, 123 for sensing the clamping force. A further cooperation might be established with the electronic unit 124 of the brake actuators 20 (see also electronic units 127, 128, with the electric power supply 134, with the EBS control unit 138 in Fig. 8 or with the control of the motor 112 via the control unit 127, 128 according to Fig. 9 or with the change of the coupling force 152 from zero to a predetermined value according to Fig. 11).

**<u>LIST OF REFERENCE NUMERALS</u>**

| 1 | operating system |
|---|---|
| 2 | pressurized air system |
| 3 | electro-mechanical brake system |
| 4 | interface |
| 5 | brake signal |
| 6 | brake signal |
| 7 | data bus |
| 8 | analogue line |
| 9 | compressor |
| 10 | supply line |
| 11 | supply port |
| 12 | air treatment unit |
| 13 | port |
| 14 | consumer circuit |
| 15 | reservoir |
| 16 | trailer control unit (TCU) |
| 17 | trailer brake circuit |
| 18 | coupling head "supply" |
| 19 | coupling head "control" |
| 20 | electro-mechanical brake actuator |

| 21 | utility vehicle |
|----|-----------------|
| 22 | tractor |
| 23 | brake control unit |
| 24 | brake control unit |
| 25 | actuation means |
| 26 | actuation means |
| 27 | line |
| 28 | line |
| 29 | line |
| 30 | data bus |
| 31 | electrical supply line |
| 32 | accumulator |
| 33 | accumulator |
| 34 | generator |
| 35 | input port |
| 36 | input port |
| 37 | electrical line |
| 38 | pneumatic line |
| 39 | pedal sensor |
| 40 | position signal |
| 41 | step |
| 42 | retardation signal |
| 43 | sensor |
| 44 | signal (pressure, level) |
| 45 | step |
| 46 | step |
| 47 | brake force request |
| 48 | step |
| 49 | brake command |

| | |
|---|---|
| 50 | retarder |
| 51 | service brake force request |
| 52 | distribution step |
| 53 | tractor brake force request |
| 54 | trailer force request |
| 55 | trailer |
| 56 | step |
| 57 | retarder brake force signal |
| 58 | tractor mass signal |
| 59 | step |
| 60 | front axle load apportioning signal |
| 61 | rear axle load apportioning signal |
| 62 | step |
| 63 | demand |
| 64 | unit |
| 65 | unit |
| 66 | unit |
| 67 | brake force signal |
| 68 | clamp force sensor |
| 69 | clamp force signal |
| 70 | wheel speed sensor |
| 71 | wheel speed signal |
| 72 | step |
| 73 | ESC sensor |
| 74 | steer angle signal |
| 75 | steer angle sensor |
| 76 | vehicle motion signal |
| 77 | wheel speed reference signal |
| 78 | motor |

| 79 | mode handler |
| --- | --- |
| 80 | motor torque signal |
| 81 | slip calculator |
| 82 | slip controller |
| 83 | position controller |
| 84 | position signal |
| 85 | motor position sensor |
| 86 | position request |
| 87 | step |
| 88 | force signal |
| 89 | clamp force sensor |
| 90 | slip request signal |
| 91 | pedal characteristic |
| 92 | maximum |
| 93 | straight line |
| 94 | position |
| 95 | position |
| 96 | second line |
| 97 | curve |
| 98 | curve |
| 99 | curve |
| 100 | brake pad |
| 101 | brake pad |
| 102 | brake disc |
| 103 | brake yoke |
| 104 | distance means |
| 105 | distance means |
| 106 | ramp plate |
| 107 | ramp bridge |

| 108 | roller |
| 109 | roller |
| 110 | ramp |
| 111 | ramp |
| 112 | electrical motor |
| 113 | transmission |
| 114 | motor shaft |
| 115 | bevel gear |
| 116 | bevel gear disc |
| 117 | crank rod |
| 118 | slack adjusting arrangement |
| 119 | drive belt |
| 120 | rod |
| 121 | rod |
| 122 | force sensor |
| 123 | force sensor |
| 124 | electronic unit |
| 125 | part |
| 126 | part |
| 127 | control unit |
| 128 | control unit |
| 129 | sensor interface |
| 130 | sensor interface |
| 131 | wheel speed sensor |
| 132 | motor interface |
| 133 | position sensor |
| 134 | electric power supply |
| 135 | bus communication |
| 136 | interface |

137  pneumatic brake system

138  EBS control unit

139  brake pressure

140  piston

141  piston force

142  brake mechanism

143  clamp force

144  brake pad/brake disc

145  frictional force

146  brake torque

147  brake geometry

148  brake force

149  road-tire friction

150  output signal

151  motor control signal

152  coupling force

153  inertial force

154  trailer brake model

155  predicted retardation

156  actual retardation

157  trailer brake correction step

158  correction

159  vehicle motion sensor

160  vehicle state estimator

161  retardation predictor

162  trailer brake force prediction

163  actual brake forces

164  brake force sensor

165  vehicle mass

166     vehicle mass estimator

167     pressure

168     bellow pressure sensor

169     characteristic

170     correction factor

171     correction factor

172     characteristic

173     characteristic

174     slope

175     engine

176     auxiliary trailer force request

177     correction factor

178     step

179     operating state

180     time interval

181     parameter

182     step

183     test signal

184     response

185     response

186     step

187     energy status

188     energy status

189     energy status

190     step

191     threshold value

192     parameter

193     control signal

194     control signal

195     control signal

196     control signal

197     control signal

198     control signal

199     signal

**Claims**

1.  Method for operating an electro-mechanical brake system (3) of a utility vehicle comprising at least two electrical energy sources (32, 33) supplying energy in the electro-mechanical brake system (3) , **characterized by** monitoring the energy status (187, 188) of at least one of the electrical energy sources (32, 33).

2.  Method of claim 1, wherein a test signal (183) is automatically generated and the energy status (187, 188) is determined from a response (184, 185) of at least one electrical energy source (32, 33) to the test signal (183).

3.  Method of claims 2, wherein the test signal (183) produces a change of a load of the electrical energy source (32, 33) and the energy status (187, 188) is determined on the basis of the change of an electrical signal of the electrical energy source (32, 33) in reaction on the load.

4.  Method of one of claims 1 to 3, wherein the determined energy status (187, 188) is signalized to the driver.

5.  Method of one of claims 1 to 4, wherein a warning signal is produced in case of the determined energy status (187, 188) being or getting smaller than a threshold value (191).

6.  Method of claim 5, wherein the threshold value (191) is dependent on at least one parameter (192).

7.  Method of one of claims 1 to 6, wherein the determined energy status (187, 188) of the electrical energy sources (32, 33) are correlated with each other or an overall energy status (189) is determined which is dependent on the two single energy status (187, 188) of the two energy sources (32, 33).

8.  Method of one of claims 1 to 6, wherein also the output of a generator (34) supplying at least one of the electrical energy sources (32, 33) with electrical energy is monitored.

9.  Method of one of claims 1 to 8 wherein the energy status (187, 188) is determined intermittent after a time interval (180).

10. Method of claim 9, wherein the time interval (180) is dependent on at least one parameter (181).

11. Method of one of claims 1 to 10, wherein the energy status (187, 188) for the different electrical energy sources is monitored at different time intervals (180).

12. Method of one of claims 1 to 11, wherein the monitoring of the energy status (187, 188) is triggered by a specific operating state (179) of the brake system (3).

13. Method of one of claims 1 to 12 wherein the supply of energy from the generator (34) is controlled on the basis of the energy status (187, 188).

14. Method of one of claims 1 to 13 wherein at least one optional consumer receiving electric energy from one electric energy source (32, 33) is automatically deactivated in case of detecting a low energy status (187, 188, 189) or at least one function of a consumer is deactivated.

15. Method of one of claims 1 to 14 wherein the electrical control signal of at least one electric-mechanical brake actuator (20) depends on the monitored energy status (187, 188, 189).

16. Method of one of claims 1 to 15 wherein the operation of a retarder or another system consuming driving energy is controlled in dependence on the determined energy status (187, 188, 189).

17. Method of one of claims 1 to 16 wherein a speed limit is automatically set in dependence on the determined energy status (187, 188, 189).

18. Method of one of claims 1 to 17 wherein the activation, the activation frequency, the activation intensity and/or activation duration of a generator (34) supplying energy to at least one electric energy source (32, 33) is controlled in dependence on the determined energy status (187, 188, 189).

19. Method of one of claims 1 to 18 wherein

    a) the energy consumption of a part of the electro-mechanical brake system (3) is monitored and
    b) in case of detecting an unexpected increased energy consumption of this part this part of the electro-mechanical brake system (3) is automatically deactivated.

20. Method of one of claims 1 to 19 wherein in case of detecting a low energy status (187, 188, 189) energy supplied by another electrical energy source is used.

21. Method of one of claims 1 to 20 wherein at the start of the vehicle moving the vehicle is prevented in case of detecting a low energy status (187, 188, 189).

Fig. 1

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

Fig. 13

**Fig. 14**

**Fig. 15**

Europäisches
Patentamt

European
Patent Office

Office européen
des brevets

## EUROPEAN SEARCH REPORT

Application Number

EP 11 18 1699

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 866 761 B2 (GERUM EDUARD [DE] ET AL) 11 January 2011 (2011-01-11) * column 7, line 29 - column 8, line 8 * ----- | 1-21 | INV. B60T13/66 B60T17/18 B60T7/04 |
| X | US 2011/005874 A1 (BEIER PETER [DE] ET AL) 13 January 2011 (2011-01-13) * paragraphs [0068], [0080], [0081]; figure 2 * ----- | 1-21 | |
| X,D | DE 197 55 050 C2 (BOSCH GMBH ROBERT [DE]) 18 October 2001 (2001-10-18) * the whole document * ----- | 1-21 | |

TECHNICAL FIELDS
SEARCHED       (IPC)

B60T

The present search report has been drawn up for all claims

| Place of search | Date of completion of the search | Examiner |
|---|---|---|
| Munich | 30 May 2012 | Dekker, Wouter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                 EP 11 18 1699

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2012

| Patent document cited in search report | | Publication date | Patent family member(s) | | | Publication date |
|---|---|---|---|---|---|---|
| US 7866761 | B2 | 11-01-2011 | AT | 345254 | T | 15-12-2006 |
| | | | CN | 1922065 | A | 28-02-2007 |
| | | | DE | 10320608 | A1 | 02-12-2004 |
| | | | EP | 1625061 | A2 | 15-02-2006 |
| | | | JP | 2006525172 | A | 09-11-2006 |
| | | | US | 2007170774 | A1 | 26-07-2007 |
| | | | WO | 2004098967 | A2 | 18-11-2004 |
| US 2011005874 | A1 | 13-01-2011 | CN | 101909953 | A | 08-12-2010 |
| | | | DE | 102008003379 | A1 | 09-07-2009 |
| | | | EP | 2229302 | A1 | 22-09-2010 |
| | | | JP | 2011508704 | A | 17-03-2011 |
| | | | US | 2011005874 | A1 | 13-01-2011 |
| | | | WO | 2009086855 | A1 | 16-07-2009 |
| DE 19755050 | C2 | 18-10-2001 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19755050 C2
- DE 19548560 C5
- DE 10316090 A1
- DE 102007036665 A1
- DE 10216184 A1
- DE 10159080 A1
- DE 102007057605 A1
- DE 102010002799 A1

- DE 19732229 A1
- EP 1925841 B1
- EP 1664571 B1
- DE 10392252 T5
- DE 112004001812 T5
- DE 112004001795 T5
- DE 112006001595 T5
- DE 112004001798 T5